# EUROPEAN PATENT APPLICATION

(11) **EP 4 501 844 A1**
(43) Date of publication of application: **05.02.2025**
(21) Application number: 23781271.4
(22) Date of filing: 27.03.2023
(51) Int. Cl.: C01B 25/14, H01B 1/06, H01B 1/10, H01M 10/0562

(54) **METHOD FOR PREPARING SULFIDE-BASED SOLID ELECTROLYTE**

(30) Priority: 31.03.2022 KR 20220040577; 23.03.2023 KR 20230038261
(71) Applicant: Solivis Inc., Seoul 04763 (KR)
(72) Inventor: SHIN, Dong Wook, Seongnam-si, Gyeonggi-do 13559 (KR); LEE, Young Min, Seoul 01362 (KR); PARK, Sang Ho, Uijeongbu-si, Gyeonggi-do 11698 (KR); KIM, Sung Jae, Namyangju-si, Gyeonggi-do 12109 (KR)
(74) Representative: HGF
(86) International application number: PCT/KR2023/004032
(87) International publication number: WO 2023/191416

(57) **Abstract**

A method of preparing a sulfide-based solid electrolyte according to embodiments comprises mixing a solvent and precursors in a reactor. In the reactor, an open vacuum atmosphere is formed. While maintaining the open vacuum atmosphere in the reactor, a mixture inside the reactor may undergo a reaction under conditions of stirring or applying ultrasonic waves. Accordingly, a high-purity sulfide-based solid electrolyte may be prepared with high efficiency.

## Description

### Technical Field

The present disclosure relates to a method of preparing a sulfide-based solid electrolyte.

### Background Art

Lithium secondary batteries have been applied to small devices such as mobile phones, laptops, and the like, but have recently been expanding to medium- to large-scale devices such as energy storage systems (ESSs) and electric vehicles (EVs). Since lithium secondary batteries use an organic liquid electrolyte to which a lithium salt is added, there is a problem of electrolyte leakage and subsequently a potential risk of ignition and explosion.

Recently, research is ongoing on all-solid-state batteries in which liquid electrolytes are replaced with solid electrolytes to overcome the limitations of lithium secondary batteries and to improve stability of batteries. All-solid-state batteries have no risk of fire or explosion by using solid electrolytes, and have high energy density, and thus, as with lithium secondary batteries, all-solid-state batteries may be used in medium- to large-scale devices such as EVs and power storage systems.

Solid electrolytes may be divided into oxide-based solid electrolytes and sulfide-based solid electrolytes. In particular, sulfide-based solid electrolytes have excellent lithium ion conductivity compared to oxide-based solid electrolytes, and have advantages of being stable over a wide voltage range. Sulfide-based solid electrolytes may be generally prepared by a melting method or a solid-phase method. In particular, in the case of a solid-phase method, starting materials and balls are placed in a milling container, pulverized, and then heat-treated by providing high energy.

KR 2019-0079135 that has been published in the art discloses a method of manufacturing a sulfide-based solid electrolyte by mixing and grinding starting materials and heat-treating the same. However, such a solid-phase method has problems in that starting materials are difficult to be uniformly dispersed and are limited in amorphization, and it has a difficulty of oversizing a milling container, which does not facilitate large-scale synthesis.

Recently, to solve these problems, research is ongoing on a liquid-phase process for synthesizing a sulfide-based solid electrolyte by using an organic solvent. However, in a liquid-phase process, the crystallinity and ionic conductivity of the obtained solid electrolyte may be reduced due to residual organic solvent or the like.

### Disclosure

### Technical Problem

One object of the present disclosure is to provide a method of preparing a sulfide-based solid electrolyte having high purity and high efficiency.

### Technical Solution

According to an embodiment of the present disclosure, a method of preparing a sulfide-based solid electrolyte includes: forming a mixture by mixing precursors and a solvent; producing a reaction product by undergoing a reaction on the mixture; and performing heat treatment on the reaction product, wherein the heat treatment includes first heat treatment and second heat treatment that is performed at a higher temperature than a temperature at which the first heat treatment is performed, and in the first heat treatment, carbon contained in the reaction product is modified to amorphous carbon.

### Advantageous Effects

According to the present disclosure, a sulfide-based solid electrolyte having high purity may be obtained.

### Description of Drawings

FIG. 1 is a schematic flowchart explaining a method of preparing a sulfide-based solid electrolyte according to an embodiment of the present disclosure.
FIG. 2 is a schematic flowchart explaining a method of preparing a sulfide-based solid electrolyte according to another embodiment of the present disclosure.
FIG. 3 is a schematic flowchart explaining a method of preparing a sulfide-based solid electrolyte according to another embodiment of the present disclosure.
FIG. 4 is a diagram showing the Raman spectroscopy results obtained from a sulfide-based solid electrolyte according to the present disclosure.
FIG. 5 is a diagram showing the X-ray diffraction (XRD) analysis results obtained from a sulfide-based solid electrolyte according to the present disclosure.
FIGS. 6 and 7 are diagrams showing the XRD analysis and Raman spectroscopy results obtained from a sulfide-based solid electrolyte according to the present disclosure.
FIG. 8 is a diagram showing the electrochemical impedance spectroscopy (EIS) results obtained from a sulfide-based solid electrolyte according to the present disclosure.

### Best Mode

According to an embodiment of the present disclosure, a method of preparing a sulfide-based solid electrolyte includes: forming a mixture by mixing precursors and a solvent; producing a reaction product by undergoing a reaction on the mixture; and performing heat treatment on the reaction product, wherein the heat treatment includes first heat treatment and second heat treatment that is performed at a higher temperature than a temperature at which the first heat treatment is performed, and in the first heat treatment, carbon contained in the reaction product is modified to amorphous carbon.

In this embodiment, the second heat treatment may be performed in an inert gas atmosphere.

In this embodiment, before the performing of the heat treatment on the reaction product, the method may further include remixing the reaction product, and accordingly, the performing of the heat treatment may include performing heat treatment on the reaction product that has been heat-treated.

In this example, after drying the reaction product, the reaction product that has been dried may be remixed.

In this embodiment, the remixing may be performed by wet ball milling.

In this embodiment, after performing of the heat treatment on the reaction product, the method may further include purifying the reaction product that has been heat-treated.

In this embodiment, the purifying of the reaction product may be performed by wet ball milling.

In this embodiment, after purifying of the reaction product, the method may further include drying the reaction product that has been purified.

In this embodiment, the precursors may include alkali metal sulfide, alkali metal halide, and phosphorus pentasulfide.

In this embodiment, during the forming of the mixture, the alkali metal sulfide and the alkali metal halide may be mixed firstly with the solvent, and the phosphorus pentasulfide may be additionally mixed secondly.

### Mode for Invention

The aforementioned objects, other objects, characteristics, and advantages of the present disclosure will be easily understood through the following preferred embodiments related to the attached drawings. However, the present disclosure is not limited to the embodiments described herein, and may be embodied in other forms. Rather, embodiments introduced herein are provided so that the disclosed content will be thorough and complete and the ideas of the present disclosure will be sufficiently conveyed to those skilled in the art.

In the description of each drawing, similar reference numerals are used for similar elements. In the accompanying drawings, the dimensions of structures are enlarged from the actual size for clarity of the present disclosure. The terms "first", "second", etc. may be used herein to describe various elements, but these elements should not be limited by these terms. These terms are only used to distinguish one element from another element. For example, a first element may be named a second element, and similarly, a second element may also be named a first component, without departing from the scope of the present disclosure. An expression used in the singular encompasses the expression of the plural, unless it has a clearly different meaning in the context.

It will be further understood that the terms "comprises" or "includes" when used in the present specification, specify the presence of stated features, integers, steps, operations, elements, components, or combinations thereof, but do not preclude the presence or addition of one or more other features, integers, steps, operations, elements, components, or combinations thereof. Additionally, when a part of a layer, film, region, plate, etc. is said to be "on" another part, the part of a layer, film, region, plate, etc. can be "directly on" the another other part, or intervening elements may be present therebetween. On the other hand, when a part of a layer, film, region, plate, etc. is said to be "under" another part, the part of a layer, film, region, plate, etc. can be "directly under" the another other part, or intervening elements may be present therebetween.

Unless otherwise specified, all numbers, values, and/or expressions used herein to express quantities of components, reaction conditions, polymer compositions, and formulations should be understood to be modified in all cases by the term "about" as these numbers are inherently approximate reflecting the various uncertainties of measurement encountered in obtaining these values, among other things. Additionally, when numerical ranges are disclosed herein, such ranges are continuous and, unless otherwise indicated, include all values from the minimum value to the maximum value of such range inclusively. Furthermore, when such a range indicates an integer, it includes all integers from the minimum value to the maximum value, unless otherwise indicated.

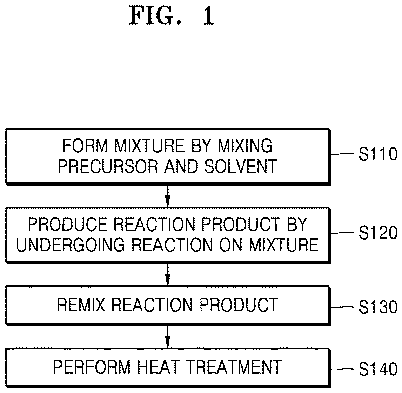

FIG. 1 is a schematic flowchart explaining a method of preparing a sulfide-based solid electrolyte according to an embodiment of the present disclosure.

Referring to FIG. 1, the method of preparing a sulfide-based solid electrolyte according to an embodiment of the present disclosure includes: forming a mixture by mixing precursors and a solvent in a reactor (S110); producing a reaction product by undergoing a reaction on the mixture (S120); remixing the reaction product (S130); and performing heat treatment on the reaction product that has been remixed (S140).

The mixing of the precursors and the solvent in the reactor (S100) may be performed by: adding the solvent first into the reactor and then adding the precursors; adding the precursors first into the reactor and then adding the solvent; or mixing the solvent and the precursors and adding the same into the reactor.

In some embodiments, the precursors may include alkali metal sulfide (A₂S; A is alkali metal), alkali metal halide (AX; X is a halogen), and phosphorus pentasulfide (P₂S₅).

The alkali metal may include lithium, sodium, potassium, or a combination thereof.

The halogen may include fluorine, chlorine, bromine, iodine, or a combination thereof.

In some embodiments, the alkali metal sulfide, the alkali metal halide, and the phosphorus pentasulfide may be mixed at a molar ratio of 4.5 to 5.5 : 0.5 to 1.5 : 1.5 to 2.5. For example, the alkali metal sulfide, the alkali metal halide, and the phosphorus pentasulfide may react at a stoichiometric molar ratio of 5 : 1 : 2.

The solvent may include a first solvent that has low solubility in the alkali metal sulfide and the alkali metal halide. In addition, the solvent may further include a second solvent that at least partially dissolves the alkali metal sulfide and the alkali metal halide.

The first solvent may include a nitrile-based solvent, an ether-based solvent, an ester-based solvent, etc., and the nitrile-based solvent may include, for example, acetonitrile.

The second solvent may include an alcohol-based solvent, a carboxylic acid-based solvent, an ester-based solvent, a ketone-based solvent, an amine-based solvent, a sulfoxide-based solvent, etc. For example, the second solvent may include acetic acid, acetyl acetone, 2-aminoethanol, anisole, benzyl alcohol, 1-butanol, 2-butanol, 2-butanone, t-butyl alcohol, cyclohexanol, cyclohexanone, di-n-butyl phthalate, diethyl glycol, diglyme, dimethoxyethane, dimethylformamide, dimethyl phthalate, dimethyl sulfoxide, dioxane, ethanol, ether, ethyl acetate, ethyl acetoacetate, ethyl benzoate, ethylene glycol, glycerin, 1-heptanol, 1-hexanol, methanol, methyl acetate, methyl t-butyl ether, 1-octanol, 1-pentanol, 2-pentanol, 3-pentanol, 2-pentanone, 3-pentanone, 1-propanol, tetrahydrofuran, etc.

Preferably, the second solvent may include acetone, 2-aminoethanol, anisole, benzyl alcohol, 1-butanol, 2-butanol, i-butanol, 2-butanone, t-butyl alcohol, cyclohexanol, cyclohexanone, dimethylformamide, ethanol, ether, 1-heptanol, 1-hexanol, methanol, methyl t-butyl ether, 1-octanol, 1-pentanol, 2-pentanol, 3-pentanol, 2-pentanone, 3-pentanone, 1-propanol, 2-propanol, tetrahydrofuran, etc., each of which contains one elemental oxygen.

The second solvent may at least partially dissolve the alkali metal sulfide and the alkali metal halide, thereby effectively promoting a reaction of the alkali metal sulfide, the alkali metal halide, and the phosphorus pentasulfide to form a high-purity sulfide-based solid electrolyte.

In some embodiments, when mixing the precursors, the alkali metal sulfide and the alkali metal halide may be mixed firstly in the first solvent, and the phosphorus pentasulfide may be additionally mixed secondly.

In some embodiments, when the second solvent is additionally included, the second solvent may be mixed during the mixing done firstly.

In some embodiments, during the mixing done firstly, the alkali metal sulfide and the alkali metal halide may be pre-stirred in the first solvent. In this case, the alkali metal sulfide and the alkali metal halide may be dissolved in the first solvent, so that unreacted reactants used in synthesis of the sulfide-based solid electrolyte may be reduced and the purity of a synthesized product may be increased. For example, the pre-stirring may be performed at 500 rpm or more, and may be performed for 0.5 to 10 hours, 0.5 to 5 hours, 0.5 to 3 hours, or 0.5 to 2 hours.

In some embodiments, the pre-stirring may be performed at room temperature to 100 °C. As the temperature at which the pre-stirring is performed increases, the quantity of impurities may decrease. Preferably, the pre-stirring may be performed at a temperature that does not exceed the boiling point of the first solvent and/or the second solvent, and for example, may be performed at 50 to 90 °C or 50 to 85 °C.

Next, by undergoing a reaction on the mixture, a product reaction is produced (S120).

The reaction product may be produced by wet ball milling. For example, the reaction product may be formed by table ball milling, vertical-ball milling, planetary milling, bead milling, etc.

In another embodiment, while maintaining an open vacuum state of maintaining the gas pressure inside the reactor at -0.1 MPa or less in a state where the reactor is not sealed, the mixture inside the reactor may be stirred or ultrasonicated to cause a reaction. In this case, bubbles generated within the mixture by stirring or applying ultrasonic waves may continue to form until the end of the reaction. Here, bulky bubbles may form. The mixing and contacting the reaction products may be promoted by the bubbles, thereby increasing the reaction rate.

In an optional embodiment, the solvent used in the formation of the mixture may be an organic solvent, such as heptane, n-heptane, toluene, etc., which does not contain oxygen.

When the reaction product is formed, the reaction product is dried to remove the solvent therefrom. Drying may be done by various methods such as vacuum drying, hot-air drying, freeze-drying, spray drying, etc.

Next, the product reaction product that has been dried is remixed (S130).

By the remixing, the reaction product may be further mixed uniformly, the remaining solvent may be removed, and carbon which is an impurity contained in the solvent may be removed from the reaction product.

In an embodiment, the remixing may be performed by wet ball milling. For example, the remixing may be performed by table ball milling, vertical-ball milling, planetary milling, bead milling, etc. In another embodiment, the remixing may be performed by stirring, homogenizing, ultra-sonication, etc.

A solvent used in the remixing may be the same as the solvent used in the formation of the mixture. That is, the solvent used in the remixing may include a nitrile-based solvent, an ether-based solvent, an ester-based solvent, etc. In an optional embodiment, the solvent used in the remixing may be an organic solvent, such as heptane, n-heptane, toluene, etc., which does not contain oxygen.

The remixing may be performed for 10 minutes to 2 hours, may be performed multiple times if necessary, and may be performed by alternately repeating wet mixing and drying mixing.

As such, by performing additional mixing after producing the reaction product, a high-purity sulfide-based solid electrolyte may be formed by completely mixing different precursors with low energy and by effectively removing impurities such as carbon and the like generated during wet synthesis.

Next, the reaction product that has been remixed is subjected to heat treatment (S140). The heat treatment may be performed under an inert gas atmosphere, such as CO, H₂, N₂, Ar, He, Ne, etc., for 1 hour to 24 hours at a temperature of 450 °C to 600 °C. By the heat treatment, crystals of the reaction product may grow.

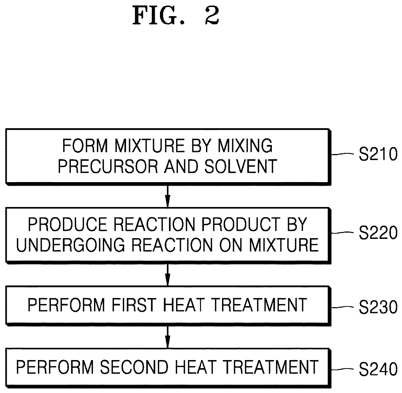

FIG. 2 is a schematic flowchart explaining a method of preparing a sulfide-based solid electrolyte according to another embodiment of the present disclosure.

Referring to FIG. 2, the method of preparing a sulfide-based solid electrolyte according to an embodiment of the present disclosure includes: forming a mixture by mixing precursors and a solvent in a reactor (S210); producing a reaction product by undergoing a reaction on the mixture (S220); performing first heat treatment on the reaction product (S230); and performing second heat treatment on the reaction product (S240).

The mixing of the precursors and the solvent in the reactor (S210) and the producing of the reaction product by undergoing a reaction on the mixture (S220) are the same as those described in connection with FIG. 1, and thus will not be described again.

The precursors may include alkali metal sulfide (A₂S; A is alkali metal), alkali metal halide (AX; X is a halogen), and phosphorus pentasulfide (P₂S₅). The alkali metal may include lithium, sodium, potassium, or a combination thereof. The halogen may include fluorine, chlorine, bromine, iodine, or a combination thereof.

In some embodiments, the alkali metal sulfide, the alkali metal halide, and the phosphorus pentasulfide may be mixed at a molar ratio of 4.5 to 5.5 : 0.5 to 1.5 : 1.5 to 2.5. For example, the alkali metal sulfide, the alkali metal halide, and the phosphorus pentasulfide may react at a stoichiometric molar ratio of 5 : 1 : 2.

The solvent may include a first solvent that has low solubility in the alkali metal sulfide and the alkali metal halide. In addition, the solvent may further include a second solvent that at least partially dissolves the alkali metal sulfide and the alkali metal halide, thereby effectively promoting a reaction of the alkali metal sulfide, the alkali metal halide, and the phosphorus pentasulfide to form a high-purity sulfide-based solid electrolyte.

The first solvent may include a nitrile-based solvent, an ether-based solvent, an ester-based solvent, etc., and the nitrile-based solvent may include, for example, acetonitrile.

The second solvent may include an alcohol-based solvent, a carboxylic acid-based solvent, an ester-based solvent, a ketone-based solvent, an amine-based solvent, a sulfoxide-based solvent, etc. For example, the second solvent may include acetic acid, acetyl acetone, 2-aminoethanol, anisole, benzyl alcohol, 1-butanol, 2-butanol, 2-butanone, t-butyl alcohol, cyclohexanol, cyclohexanone, di-n-butyl phthalate, diethyl glycol, diglyme, dimethoxyethane, dimethylformamide, dimethyl phthalate, dimethyl sulfoxide, dioxane, ethanol, ether, ethyl acetate, ethyl acetoacetate, ethyl benzoate, ethylene glycol, glycerin, 1-heptanol, 1-hexanol, methanol, methyl acetate, methyl t-butyl ether, 1-octanol, 1-pentanol, 2-pentanol, 3-pentanol, 2-pentanone, 3-pentanone, 1-propanol, tetrahydrofuran, etc. Preferably, the second solvent may include acetone, 2-aminoethanol, anisole, benzyl alcohol, 1-butanol, 2-butanol, i-butanol, 2-butanone, t-butyl alcohol, cyclohexanol, cyclohexanone, dimethylformamide, ethanol, ether, 1-heptanol, 1-hexanol, methanol, methyl t-butyl ether, 1-octanol, 1-pentanol, 2-pentanol, 3-pentanol, 2-pentanone, 3-pentanone, 1-propanol, 2-propanol, tetrahydrofuran, etc., each of which contains one elemental oxygen.

After the producing of the reaction product by undergoing a reaction on the mixture by wet ball milling or the like (S220), the performing of the heat treatment may include performing of the first heat treatment (S230) and performing of the second heat treatment (S240) as shown in FIG. 2.

When the reaction product is formed by wet synthesis, the residual solvent may remain even if the solvent is dried. Thus, when a heat treatment process is performed in the presence of the residual solvent remaining, carbon, nitrogen, etc. among the elements constituting the solvent may participate in the reaction and generate impurities. In particular, among elemental lithium (Li), elemental phosphorus (P), elemental sulfur (S), and elemental halogen that constitute the sulfide-based solid electrolyte, the most stable phase at a low temperatures is Li₃PS₄, which is synthesized at a temperature around 200 °C. This phase has a lower ionic conductivity than an argyrodite-based solid electrolyte having a crystalline structure, and thus it is treated as an impurity. In addition, when crystallization is performed by heat treatment in the presence of impurities such as residual organic solvents, the sulfide-based solid electrolyte may have low purity and low crystallinity as well as low ionic conductivity along with a large quantity of impurity phases.

However, as in the present disclosure, when the performing of the heat treatment includes performing of the first heat treatment (S230) and the performing of the second heat treatment (S240), impurities may be additionally removed and a stable solid electrolyte crystal phase may be synthesized, resulting in high purity and high crystallinity.

More specifically, the performing of the first heat treatment (S230) may additionally induce volatilization of the solvent that may remain in the reaction product, may modify carbon among the elements of the remaining organic solvent to amorphous carbon having low electrical conductivity, and may maintain the stoichiometric ratio among the precursors, thereby inducing synthesis of structurally stable argyrodite.

The performing of the first heat treatment (S230) may be done at a temperature of 100 °C, at which the solvent may sufficiently be volatilized, to 450°C at which amorphous carbon may be crystallized.

The performing of the second heat treatment (S240) may be done at a higher temperature than the temperature at which the first heat treatment S230 is performed. The performing of the second heat treatment (S240) may be done under an inert gas atmosphere, such as CO, H₂, N₂, Ar, He, Ne, etc., for 1 hour to 24 hours at a temperature of 450 °C to 600 °C. By the second heat treatment, crystals of the reaction product may grow.

Meanwhile, in an embodiment described in FIG. 2, the method may further include the remixing of the reaction product of FIG. 1 (S130 of FIG. 1), and as a result, impurities such as carbon generated during wet synthesis may be more effectively removed, thereby forming a high-purity sulfide-based solid electrolyte.

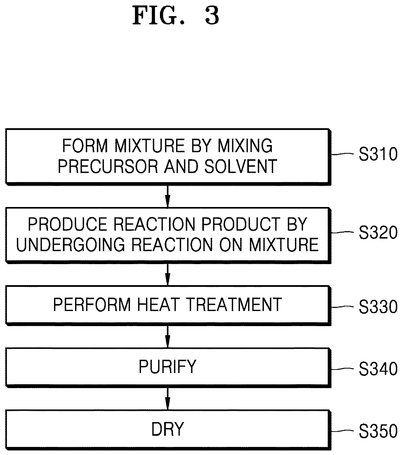

FIG. 3 is a schematic flowchart explaining a method of preparing a sulfide-based solid electrolyte according to another embodiment of the present disclosure.

Referring to FIG. 3, the method of preparing a sulfide-based solid electrolyte according to an embodiment of the present disclosure includes: forming a mixture by mixing precursors and a solvent in a reactor (S310); producing a reaction product by undergoing a reaction on the mixture (S320); performing heat treatment on the reaction product (S330); purifying the reaction product that has been heat-treated (S340); and drying the reaction product that has been dried (S350).

Hereinafter, the same contents as described in FIG. 1 will not be repeated, and only the differences will be described.

The precursors may include alkali metal sulfide (A₂S; A is alkali metal), alkali metal halide (AX; X is a halogen), and phosphorus pentasulfide (P₂S₅). The alkali metal may include lithium, sodium, potassium, or a combination thereof. The halogen may include fluorine, chlorine, bromine, iodine, or a combination thereof.

In some embodiments, the alkali metal sulfide, the alkali metal halide, and the phosphorus pentasulfide may be mixed at a molar ratio of 4.5 to 5.5 : 0.5 to 1.5 : 1.5 to 2.5. For example, the alkali metal sulfide, the alkali metal halide, and the phosphorus pentasulfide may react at a stoichiometric molar ratio of 5 : 1 : 2.

The solvent may include a first solvent that has low solubility in the alkali metal sulfide and the alkali metal halide. In addition, the solvent may further include a second solvent that at least partially dissolves the alkali metal sulfide and the alkali metal halide, thereby effectively promoting a reaction of the alkali metal sulfide, the alkali metal halide, and the phosphorus pentasulfide to form a high-purity sulfide-based solid electrolyte.

The first solvent may include a nitrile-based solvent, an ether-based solvent, an ester-based solvent, etc., and the nitrile-based solvent may include, for example, acetonitrile.

The second solvent may include an alcohol-based solvent, a carboxylic acid-based solvent, an ester-based solvent, a ketone-based solvent, an amine-based solvent, a sulfoxide-based solvent, etc. For example, the second solvent may include acetic acid, acetyl acetone, 2-aminoethanol, anisole, benzyl alcohol, 1-butanol, 2-butanol, 2-butanone, t-butyl alcohol, cyclohexanol, cyclohexanone, di-n-butyl phthalate, diethyl glycol, diglyme, dimethoxyethane, dimethylformamide, dimethyl phthalate, dimethyl sulfoxide, dioxane, ethanol, ether, ethyl acetate, ethyl acetoacetate, ethyl benzoate, ethylene glycol, glycerin, 1-heptanol, 1-hexanol, methanol, methyl acetate, methyl t-butyl ether, 1-octanol, 1-pentanol, 2-pentanol, 3-pentanol, 2-pentanone, 3-pentanone, 1-propanol, tetrahydrofuran, etc. Preferably, the second solvent may include acetone, 2-aminoethanol, anisole, benzyl alcohol, 1-butanol, 2-butanol, i-butanol, 2-butanone, t-butyl alcohol, cyclohexanol, cyclohexanone, dimethylformamide, ethanol, ether, 1-heptanol, 1-hexanol, methanol, methyl t-butyl ether, 1-octanol, 1-pentanol, 2-pentanol, 3-pentanol, 2-pentanone, 3-pentanone, 1-propanol, 2-propanol, tetrahydrofuran, etc., each of which contains one elemental oxygen.

The mixing of the precursors and the solvent in the reactor (3210), the producing of the reaction product by undergoing a reaction on the mixture (S320), and the performing of the heat treatment (S330) are the same as those described in connection with FIG. 1, and thus will not be described again.

In the purifying of the reaction product that has been heat-treated (S340), by additionally mixing the reaction product, residual impurities in the reaction product may be additionally removed by using physical force and weak physical bonds of secondary and tertiary particles may be broken, thereby ultimately controlling the particle size of the reaction product.

In the reaction product that has been heat-treated, there may be a small quantity of impurities that have not been completely removed, and particularly, via the heat treatment, the reaction product may have a wide particle size distribution depending on a crystallization mechanism. In addition, when the reaction product is mixed uniformly, aggregation may occur due to the surface energy so that, by additionally purifying the reaction product that has been heat-treated, aggregation of the reaction product may be eliminated, thereby preparing a solid electrolyte having high purity and uniform particle size distribution.

In an embodiment, the purifying of the reaction product (S340) may be performed by wet ball milling. For example, after mixing the reaction product and an organic solvent, the resulting reaction product may be purified by ball milling. By the ball milling, impurities such as carbon on the surface of the reaction product may be removed, and the weak bonds between particles may be broken, thereby controlling the particle size of the reaction product.

The ball milling may include various methods such as table ball milling, vertical-ball milling, planetary milling, bead milling, or the like. In addition, the mixing in the purifying may be performed by stirring, homogenizing, ultra-sonication, etc.

Meanwhile, the purifying may be performed in either a wet condition or a dry condition. In a wet condition, a drying process may be included, whereas, in a dry condition, a drying process is not included, but an additional eliminating process may be included instead. The drying process may be performed by alternately repeating drying in a wet condition and drying in a dry condition.

Next, the reaction product that has been purified may be dried (S350). The reaction product that has been purified may be dried by using a centrifuge. The reaction product that has been purified is in a state of being free of impurities and having a controlled particle size through the purifying. However, to prevent the particle size from increasing again during the drying process due to the surface energy, the drying process may be performed by centrifugation .

In an optional embodiment, in addition to the aforementioned methods, the drying process may be a general drying process such as hot-air drying, freeze-drying, spray drying, etc., and may include an eliminating process after the drying.

Meanwhile, in an embodiment described in FIG. 3, the method may further include: the remixing of the reaction product as described in FIG. 1 (S130 of FIG. 1); and at least one of the performing of the first heat treatment described in FIG. 2 (S230 of FIG. 2) and the performing of the second heat treatment described in FIG. 2 (S240 of FIG. 2), and as a result, impurities such as carbon generated during wet synthesis may be more effectively removed to form a high-purity sulfide-based solid electrolyte.

Hereinafter, the present disclosure will be described in more detail with reference to the following examples. The following examples are merely examples to aid understanding of the present disclosure, and the scope of the present disclosure is not limited thereto.

### - Example: Preparation of sulfide-based solid electrolyte -

As a starting material for preparing a sulfide-based solid electrolyte, Li₇₋ₓPS₆₋ₓHaₓ (1≤x≤2), was used, and in this example, Li₆PS₅Cl where Ha is chloride and x is 1 was synthesized.

First, lithium sulfide (Li₂S), phosphorus pentasulfide (P₂S₅), and lithium chloride (LiCI) as precursors were mixed in acetonitrile as a solvent, and ball milling was performed thereon to form a mixture.

Subsequently, the mixture was vacuum-dried, and then subjected to wet ball milling for 1 hour to produce a reaction product.

The reaction product thus produced was dried, and then remixed by wet ball milling.

Next, after drying the reaction product that has been remixed, first heat treatment was performed thereon at 200 °C for 5 hours to remove residual carbon, followed by second heat treatment at 550 °C for 12 hours in an argon (Ar) atmosphere, thereby growing crystals of the reaction product.

In addition, ball milling using acetonitrile as a solvent was performed for 2 hours, followed by centrifugation at 4000 RPM for 1 hour to remove the supernatant liquid to perform a purification process, and as a drying process, vacuum drying was performed for 12 hours to finally prepare a sulfide-based solid electrolyte.

### Comparative Example 1

In Comparative Example 1, a sulfide-based solid electrolyte was prepared in the same manner as in the Example, except that the remixing process after the formation of the reaction product was omitted.

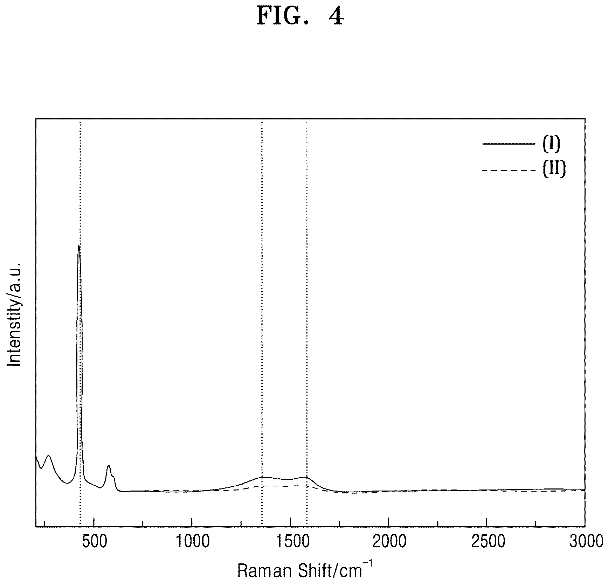

FIG. 4 is a diagram showing the Raman spectroscopy results obtained from the Example and Comparative Example 1. In FIG. 4, (I) shows the Raman spectroscopy result obtained from the Example, and (II) shows the Raman spectroscopy result obtained from Example 1.

Referring to FIG. 4, in the case of the Example (I) in which the remixing of the reaction product is performed after the formation of the mixture, there was no significant difference in the peaks at 470 cm⁻¹ as compared to Comparative Example 1 (II), indicating that the intensity of PS₄³⁻ bonding was maintained and that the overall area of the peaks related to impurities including carbon presumed to originate from the solvent was relatively reduced. Accordingly, by performing the remixing after the formation of the reaction product, the sulfide-based solid electrolyte was confirmed to be structurally stable and effective in removing impurities.

In other words, according to the present disclosure, by additionally remixing the reaction product, the three precursors could be completely mixed with low energy and impurities (carbon, etc.) generated during wet synthesis could be also effectively removed.

### Comparative Example 2

In Comparative Example 2, a sulfide-based solid electrolyte was prepared in the same manner as in the Example, except that a single heat treatment process was performed as compared to the Example.

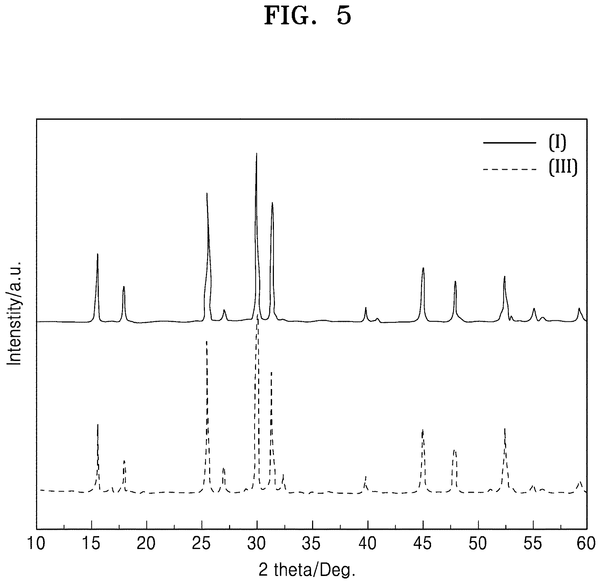

FIG. 5 is a diagram showing the X-ray diffraction (XRD) analysis results obtained from the sulfide-based solid electrolyte according to the present disclosure. In FIG. 5, (I) shows the XRD analysis result obtained from the Example, and (III) shows the XRD analysis result obtained from Comparative Example 2.

Referring to FIG. 5, in the case of Comparative Example 2 (III), together with Li₃PS₄ at 16 (2θ/deg.) which is an impurity phase,in accordance with the stoichiometric ratio, Li₂S at 27 (2θ/deg.),LiCl at 29 (2θ/deg.) and 32 (2θ/deg.), etc.,were detected in large quantities. However, in the case of the Example (I) in which the second heat treatment was performed after the first heat treatment, Li₃PS₄ was hardly detected, and other impurities other than a small quantity of Li₂S were not detected.

In other words, by performing the heat treatment separately in two stages, the first heat treatment and the second heat treatment, impurities were additionally removed from the reaction product, and a stable solid electrolyte crystal phase was synthesized, resulting in high purity and high crystallinity.

### Comparative Example 3

In Comparative Example 3, a sulfide-based solid electrolyte was prepared in the same manner as in the Example, except that the purifying process and the drying process were not performed.

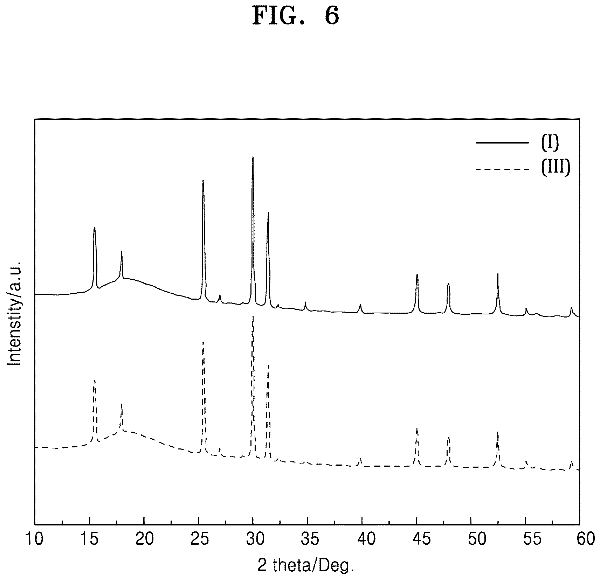

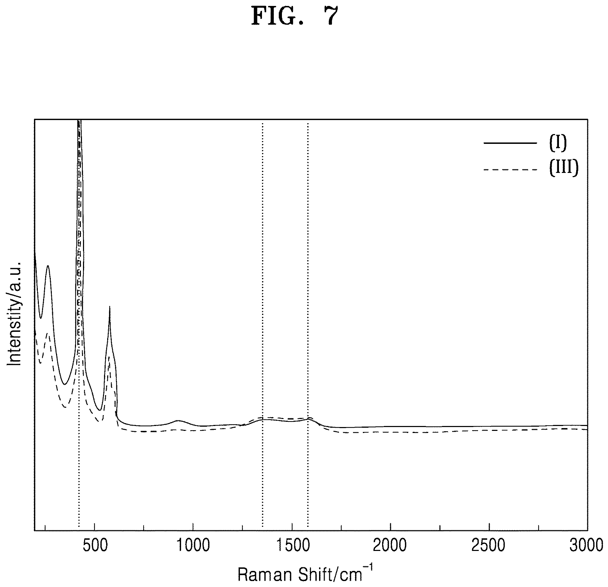

FIGS. 6 and 7 are diagrams showing the XRD analysis and Raman spectroscopy results obtained from the sulfide-based solid electrolyte according to the present disclosure. In FIGS. 6 and 7, (I) shows the XRD analysis and Raman spectroscopy results obtained from the Example, and (IV) shows the XRD analysis and Raman spectroscopy results obtained from Comparative Example 3.

First, as shown in FIG. 6, it was confirmed that there was no significant difference in the XRD results obtained from the Example (I), in which the purifying process and the drying process were performed after the heat treatment in the Example (I), and Comparative Example 3 (IV), in which the purifying process and the drying process were not performed. In other words, even if the purifying process and the dry process were performed after the heat treatment, there was no significant difference in crystallinity, phase change, etc., and thus the purifying process and the drying process do not seem to exhibit a significant effect on the solid electrolyte.

On the other hand, referring to FIG. 7, in the case of the Example (I) compared to Comparative Example 3 (IV), the peaks (at 1350 to 1580 cm⁻¹) related to impurities, especially carbon, remaining in a small amount before the purification, were found to be sharply reduced. On the other hand, the PS₄³⁻ peak (at 430 cm⁻¹) representing the main bond of the sulfide solid electrolyte was found to have no effect.

In other words, after the reaction product that has been heat-treated was mixed with an organic solvent, the resulting reaction product underwent the purifying by ball milling and the drying by centrifugation, and accordingly, impurities such as carbon on the surface of the reaction product were removed, and at the same time, aggregation of the sample was eliminated. This means that a solid electrolyte with high purity and uniform particle size distribution was prepared.

In addition, as a result of undergoing the purifying and the drying, the Example (I) was found to have small values in the average particle size (D₅₀) and particle size distribution than those in Comparative Example 3 (IV), as shown in Table 1.

**[Table 1]**

| | D₅₀ | Particle size distribution (width) |
|---|---|---|
| Example (I) | 4.47 | 6.47 |
| Comparative Example 3 (IV) | 10.37 | 19.32 |

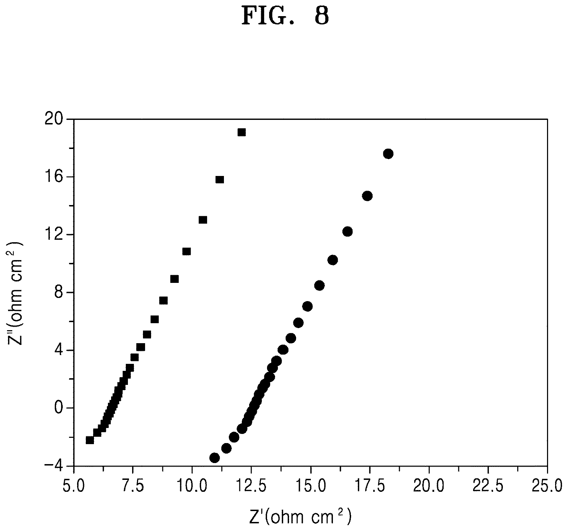

FIG. 8 is a diagram showing the electrochemical impedance spectroscopy (EIS) results obtained from the sulfide-based solid electrolyte according to the present disclosure. FIG. 8 shows the EIS results obtained from the sulfide-based solid electrolyte of the Example. Due to the nature of a battery, the electronic conductivity of an electrolyte itself must be minimized to maintain the performance of the electrolyte, and it is more advantageous to have higher ionic conductivity.

Referring to FIG. 8, the slope of the EIS obtained from the Example was found to be 45° or more, indicating that the electronic conductivity is low and the ionic conductivity is excellent. Therefore, the sulfide-based solid electrolyte according to the present disclosure was confirmed to have excellent characteristics.

In addition, according to the present disclosure, the reaction product is formed by wet milling using a solvent, but through the remixing process performed on the reaction product thus formed, the first heat treatment, the second heat treatment, and the purifying process, carbon may be effectively removed, and the sulfide-based solid electrolyte having an argyrodite-type crystal structure may have a uniform particle size and freely adjust the particle size through the purifying process.

As such, the present disclosure has been described with reference to an embodiment shown in the drawings, but this is merely an example, and those skilled in the art will understand that various modifications and variations of the embodiment are allowable therefrom. Therefore, the true technical protection scope of the present disclosure should be determined by the technical spirit of the attached patent claims.

## Claims

1. A method of preparing a sulfide-based solid electrolyte, the method comprising:
forming a mixture by mixing precursors and a solvent;
producing a reaction product by undergoing a reaction on the mixture; and
performing heat treatment on the reaction product,
wherein the heat treatment includes first heat treatment and second heat treatment that is performed at a higher temperature than a temperature at which the first heat treatment is performed, and
in the first heat treatment, carbon contained in the reaction product is modified to amorphous carbon.

2. The method of claim 1, wherein the second heat treatment is performed in an inert gas atmosphere.

3. The method of claim 1, wherein the method further comprises, before the performing of the heat treatment on the reaction product, remixing the reaction product,
wherein the performing of the heat treatment comprises performing heat treatment on the reaction product that has been remixed.

4. The method of claim 3, wherein the remixing is to remix, after drying the reaction product, the dried reaction product.

5. The method of claim 4, wherein the remixing is performed by wet ball milling.

6. The method of claim 1, wherein the method further comprises, after the performing of the heat treatment on the reaction product, purifying the reaction product that has been heat-treated.

7. The method of claim 6, wherein the purifying of the reaction product is performed by wet ball milling.

8. The method of claim 7, wherein the method further comprises, after the purifying of the reaction product, drying the reaction product that has been purified.

9. The method of claim 1, wherein the precursors comprise alkali metal sulfide, alkali metal halide, and phosphorus pentasulfide.

10. The method of claim 9, wherein, in the forming of the mixture, the alkali metal sulfide and the alkali metal halide are mixed firstly in the solvent, and the phosphorus pentasulfide is additionally mixed secondly.
